# EUROPEAN PATENT SPECIFICATION

(11) **EP 3 564 028 B1**
(45) Date of publication and mention of the grant of the patent: **09.06.2021**
(21) Application number: 19169284.7
(22) Date of filing: 15.04.2019
(51) Int. Cl.: B32B 15/01, B32B 15/04, G12B 1/02, H01H 37/52

(54) **DISSIMILAR METAL JOINED MATERIAL AND METHOD OF MANUFACTURING SAME**
UNGLEICHES METALLISCHES VERBINDUNGSMATERIAL UND VERFAHREN ZUR HERSTELLUNG DAVON
MATÉRIAU MÉTALLIQUE DISSEMBLABLE ASSEMBLÉ ET SON PROCÉDÉ DE FABRICATION

(30) Priority: 02.05.2018 JP 2018088838; 11.01.2019 JP 2019003185
(43) Date of publication of application: 06.11.2019
(73) Proprietor: Hitachi Metals, Ltd., Tokyo 108-8224 (JP)
(72) Inventor: NISHIMURA, Junko, Osaka, 5640043 (JP)
(74) Representative: Reitstötter Kinzebach

(56) References cited:
- JP-A- S62 209 381
- US-A- 2 349 577
- US-A- 3 219 423
- US-A- 3 646 591
- US-A- 3 707 359
- US-A- 3 708 863
- US-A- 3 788 821
- US-A- 3 865 559
- US-A- 3 902 867
- US-A- 5 573 860
- US-A1- 2012 077 056
- US-A1- 2018 233 310

## Description

### Technical Field

The present invention relates to a dissimilar metal joined material and a method of manufacturing the same.

### Background Art

A dissimilar metal joined material such as a bimetal and a trimetal is known. The dissimilar metal joined material is formed by overlapping at least two types of metal different from each other. In such a dissimilar metal joined material, a degree of curvature changes with a temperature change. Therefore, the dissimilar metal joined material is used in various fields of consumer use and industrial use such as thermostats and thermal switches which operate with the temperature change.

US 5 573 860 discloses a bimetal formed by bonding a Ni-Co-Fe group low thermal expansion alloy and a high thermal expansion metal or alloy directly or via an intermediate metal or alloy. Corrosion resistant coating layers can be formed on both of the low thermal expansion material and the high thermal expansion material. JP-B-3-57438 proposes that a passive film is formed on a surface of the dissimilar metal joined material to improve corrosion resistance.

### Summary of Invention

### Technical Problem

It is required that the dissimilar metal joined material have longer life. Since the dissimilar metal joined material may end life resulting from corrosion, it is required that the dissimilar metal joined material have better corrosion resistance. However, the passive film proposed in JP-B-3-57438 is a metal oxide film and is hard and brittle. A thickness of the passive film formed by the method proposed in JP-B-3-57438 is about 2 to 3 nm. Therefore, the passive film may crack each time the dissimilar metal joined material repeats curving, and it is difficult to maintain the corrosion resistance for a long period. Even if the thickness of the passive film can be increased, the passive film easily cracks further, and it is possible to affect characteristics such as an curvature coefficient and volume resistivity of the dissimilar metal joined material.

Therefore, an object of the present invention is to provide a dissimilar metal joined material that has corrosion resistance that can prolong life resulting from corrosion and has a small difference from original characteristics.

### Solution to Problem

According to one aspect of the present invention, there is provided a dissimilar metal joined material including: a clad material including a high thermal expansion layer composed of an alloy containing Mn, selected from a Fe-Ni-Mn based alloy containing 15% to 30% of Ni, 2% to 10% of Mn and the balance of Fe and unavoidable impurities, and a Cu-Mn-Ni based alloy containing 60% to 80% of Mn, 5% to 20% of Ni and the balance of Cu and unavoidable impurities, and a low thermal expansion layer composed of an alloy containing Ni, selected from a Fe-Ni based alloy containing 30% to 60% of Ni and the balance of Fe and unavoidable impurities, Fe-29 Ni-17 Co, Fe-36 Ni-12 Cr, Fe-36 Ni-9 Cr, Fe-42 Ni-5.5 Cr-1 Ti, and Fe-43 Ni-5 Cr-3 Ti-1 Co, the low thermal expansion layer being joined directly to the high thermal expansion layer or via an intermediate layer; and a corrosion resistant plating layer provided on at least a surface of the high thermal expansion layer, the corrosion resistant plating layer having a thickness of 10 nm to 120 nm, wherein the corrosion resistant plating layer is a Ni plating layer.

Another aspect of the present invention provides a method of manufacturing a dissimilar metal joined material, the method includes the successive steps of: degreasing surfaces of a clad material containing a high thermal expansion layer composed of an alloy containing Mn, selected from a Fe-Ni-Mn based alloy containing 15% to 30% of Ni, 2% to 10% of Mn and the balance of Fe and unavoidable impurities, and a Cu-Mn-Ni based alloy containing 60% to 80% of Mn, 5% to 20% of Ni and the balance of Cu and unavoidable impurities, and a low thermal expansion layer composed of an alloy containing Ni, selected from a Fe-Ni based alloy containing 30% to 60% of Ni and the balance of Fe and unavoidable impurities, Fe-29 Ni-17 Co, Fe-36 Ni-12 Cr, Fe-36 Ni-9 Cr, Fe-42 Ni-5.5 Cr-1 Ti, and Fe-43 Ni-5 Cr-3 Ti-1 Co, the low thermal expansion layer being joined directly to the high thermal expansion layer or joined via an intermediate layer; washing at least the surface of the high thermal expansion layer; plating at least the surface of the high thermal expansion layer with a Ni plating solution, wherein the plating solution has a pH of 4.5 to 6.0, to form a corrosion resistant plating layer having a thickness of 10 nm to 120 nm; removing the plating solution from the surface of the high thermal expansion layer; and drying the dissimilar metal joined material.

### Advantageous Effects of Invention

According to the present invention, there is provided a dissimilar metal joined material that has corrosion resistance capable of prolonging life resulting from corrosion and has a small difference from the original characteristics.

### Brief Description of Drawings

Fig. 1 is a cross-sectional view of a dissimilar metal joined material according to the present embodiment;
Fig. 2 is a cross-sectional view of a dissimilar metal joined material according to Modification 1;
Fig. 3 is a cross-sectional view of a dissimilar metal joined material according to Modification 2;
Fig. 4 is a cross-sectional view of a dissimilar metal joined material according to Modification 3;
Fig. 5 is a graph showing a relationship between a thickness and volume resistivity of a corrosion resistant plating layer;
Fig. 6 is a graph showing a relationship between the thickness and a curvature coefficient of the corrosion resistant plating layer; and
Fig. 7 is a photograph showing a surface of a high thermal expansion layer after performing a corrosion test on a bimetal.

### Description of Embodiments

Hereinafter, an embodiment of a dissimilar metal joined material and a method of manufacturing the same will be described with reference to the drawings. The present invention is not limited to these examples but is indicated by a scope of claims, and is intended to include meanings equivalent to the scope of claims and all alterations within the scope. Metal material composition and an element content ratio are indicated by mass%, unless otherwise specified.

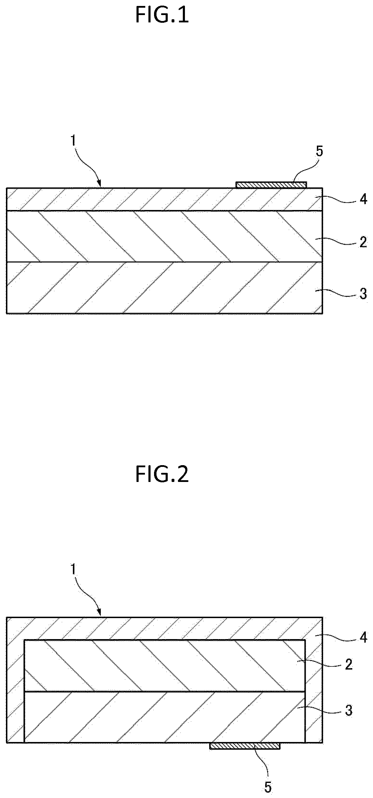

Fig. 1 is a cross-sectional view of a bimetal 1 (an example of the dissimilar metal joined material) according to the present embodiment. As shown in Fig. 1, the bimetal 1 includes a high thermal expansion layer 2, a low thermal expansion layer 3, and a corrosion resistant plating layer 4. In the illustrated example, the corrosion resistant plating layer 4, the high thermal expansion layer 2, and the low thermal expansion layer 3 are stacked in this order.

The high thermal expansion layer 2 and the low thermal expansion layer 3 constitute a clad material joined through rolling, diffusion annealing, and the like. The present invention can also be applied to a trimetal (an example of the dissimilar metal joined material) constituted by a clad material formed by adding an intermediate layer (not illustrated) between the high thermal expansion layer 2 and the low thermal expansion layer 3 and joined through rolling, diffusion annealing, and the like. The clad material without the corrosion resistant plating layer 4 may have a total thickness of 50 µm to 1 mm. In a case of a relatively thin clad material having a total thickness of 50 µm to 0.5 mm, it is considered that the corrosion has a large impact, and thus it is particularly effective to form the corrosion resistant plating layer 4 to obtain corrosion resistance.

The high thermal expansion layer 2 is composed of an alloy (metal) containing Mn (material of the high thermal expansion layer 2 constituting raw material plate). Mn is expected to increase the thermal expansion coefficient. By intentionally adding Mn to the high thermal expansion layer 2, it is configured such that a thermal expansion coefficient of the high thermal expansion layer 2 is larger than that of the low thermal expansion layer 3.

The high thermal expansion layer 2 may be an Fe-Ni-Mn based alloy containing Mn. The high thermal expansion layer 2 may contain 15% to 30% of Ni, preferably 20% to 26% of Ni, and more preferably 22% to 24% of Ni. The high thermal expansion layer 2 may contain 2% to 10% of Mn, preferably 5% to 6% of Mn. The high thermal expansion layer 2 may contain the balance of Fe and unavoidable impurities.

The high thermal expansion layer 2 may be an Cu-Mn-Ni based alloy containing Mn. The high thermal expansion layer 2 may contain 60% to 80% of Mn, preferably 65% to 75% of Mn, and more preferably 70% to 73% of Mn. The high thermal expansion layer 2 may contain 5% to 20% of Ni, preferably 7% to 15% of Ni, and more preferably 9% to 11% of Ni. The high thermal expansion layer 2 may contain the balance of Cu and unavoidable impurities.

Examples of the material of the high thermal expansion layer 2 constituting raw material plate include the Fe-Ni-Mn based alloy and the Cu-Mn-Ni based alloy, and TM1 (Mn-Cu-Ni based such as Mn-8 Cu-20 Ni), TM2, and TM4 to TM6 (Fe-Ni-Mn based) in accordance with JIS C2530. If the raw material plate (high thermal expansion layer) is composed of such material (alloy composition), an average thermal expansion coefficient from 30°C to 100°C can be set within a range of 18 × 10⁻⁶/°C to 28.5 × 10⁻⁶/°C by selection of the material, which is suitable for a bimetal and a trimetal since thermal expansion is large when heat is generated by excessive energization. A thickness of the high thermal expansion layer 2 may be 50% to 60% of the total thickness of the clad material without the corrosion resistant plating layer 4. For example, the thickness of the high thermal expansion layer 2 may be 25 µm to 0.6 mm.

The low thermal expansion layer 3 is composed of an alloy (metal) containing Ni (material of the low thermal expansion layer 3 constituting raw material plate). Elements such as Mn and Cu may increase the thermal expansion coefficient. Although the elements such as Mn and Cu may be included as unavoidable impurities. However, by intentionally not adding the elements such as Mn and Cu to the alloy, it is configured such that the thermal expansion coefficient of the low thermal expansion layer 3 is smaller than that of the high thermal expansion layer 2.

The low thermal expansion layer 3 may be an Fe-Ni based alloy containing Ni. The low thermal expansion layer 3 may contain 30% to 60% of Ni, preferably 33% to 55% of Ni, and more preferably 33% to 51% of Ni. The low thermal expansion layer 3 may contain the balance of Fe and unavoidable impurities.

Examples of the material of the low thermal expansion layer 3 constituting raw material plate include the Fe-Ni based alloy such as Fe-42 Ni based (42 alloy) or Fe-36 Ni based (36 alloy), and an alloy such as Fe-29 Ni-17 Co, Fe-36 Ni-12 Cr, Fe-36 Ni-9 Cr, Fe-42 Ni-5.5 Cr-1 Ti, and Fe-43 Ni-5 Cr-3 Ti-1 Co.

If the raw material plate (low thermal expansion layer) is composed of such material (alloy composition), an average thermal expansion coefficient from 30°C to 100°C can be set within a range of 0.5 × 10⁻⁶/°C to 11.0 × 10⁻⁶/°C by selection of the material, which is suitable for a bimetal and a trimetal since thermal expansion is small when heat is generated by excessive energization. A difference between an average thermal expansion coefficient of the low thermal expansion layer and that of the high thermal expansion layer from 30°C to 100°C can be set within a range of 7 × 10⁻⁶/°C to 28 × 10⁻⁶/°C by selection of combination of the low thermal expansion layer and the high thermal expansion layer, which is suitable for the bimetal and the trimetal since a curvature coefficient can be selected variously. A thickness of the low thermal expansion layer 3 may be 40% to 50% of the total thickness of the clad material without the corrosion resistant plating layer 4. For example, the thickness of the low thermal expansion layer 3 may be 20 µm to 0.5 mm.

The corrosion resistant plating layer 4 is a plating layer composed of a metal that can be expected to have corrosion resistance. The corrosion resistant plating layer 4 may be provided on at least a surface of the high thermal expansion layer 2. The surface of the high thermal expansion layer 2 corresponds to one face of the high thermal expansion layer 2 that is opposite to the other face to which the low thermal expansion layer 3 is joined, or to which the intermediate layer is bonded. A nickel plating layer (Ni plating layer) is applied to the corrosion resistant plating layer 4. Any of the Ni-based plating layer are excellent in corrosion resistance. As an example, the Ni plating layer has small electrical resistance. The Ni plating layer formed by an electrolytic plating treatment has smaller electrical resistance.

The corrosion resistant plating layer 4 is a Ni plating layer. The Ni plating layer can be easily produced by an electrolytic Ni plating treatment (also referred to as Ni electroplating treatment) or an electroless Ni plating treatment. In general, the Ni electroplating treatment is preferable since treatment time is short and cost can be reduced as compared with the electroless Ni plating treatment. The corrosion resistant plating layer 4 has a thickness of 10 nm to 120 nm. Since the corrosion resistant plating layer 4 has a thickness of 10 nm to 120 nm, rigidity of the corrosion resistant plating layer 4 is extremely small as compared with the high thermal expansion layer 2 composed of an alloy containing Mn and the low thermal expansion layer 3 composed of an alloy containing Mn. Therefore, even if the corrosion resistant plating layer 4 is formed, the curvature coefficient of the bimetal 1 is difficult to change. That is, the bimetal 1 including the corrosion resistant plating layer 4 according to the present embodiment can have a curvature coefficient close to the curvature coefficient of the bimetal without the corrosion resistant plating layer.

Since the corrosion resistant plating layer 4 has a thickness of 10 nm to 120 nm, a change in volume resistivity due to the corrosion resistant plating layer 4 is extremely small as compared with the bimetal composed of the high thermal expansion layer and the low thermal expansion layer without the corrosion resistant plating layer. Therefore, when the bimetal 1 is to be energized, a current can flow through the high thermal expansion layer 2 and the low thermal expansion layer 3. Therefore, even if the corrosion resistant plating layer 4 is formed, the volume resistivity of the bimetal 1 is difficult to change. That is, the bimetal 1 including the corrosion resistant plating layer 4 according to the present embodiment can have volume resistivity close to the volume resistivity of the bimetal without the corrosion resistant plating layer.

In this manner, the bimetal 1 of the present embodiment including the corrosion resistant plating layer 4 having a thickness of 10 nm to 120 nm can prolong life resulting from corrosion by the corrosion resistant plating layer 4, and a difference from characteristics of an original bimetal having no corrosion resistant plating layer is small. The corrosion resistance of the bimetal 1 can be improved by increasing the thickness of the corrosion resistant plating layer 4 to 20 nm, 30 nm, and 40 nm, for example. The difference between the characteristics of the bimetal 1 and the characteristics of the original bimetal without the corrosion resistant plating layer can be reduced by reducing the thickness of the corrosion resistant plating layer 4 to 110 nm, 100 nm, 90 nm, 80 nm, and 70 nm, for example. From such a viewpoint, by setting the thickness of the corrosion resistant plating layer 4 to, for example, 30 nm to 80 nm (or 40 nm to 70 nm), the life resulting from corrosion can be further prolonged, and the difference from the characteristics (volume resistivity) of the original bimetal without the corrosion resistant plating layer becomes smaller.

Metal constituting the high thermal expansion layer 2 is composed of an alloy containing Mn for the reason described above. Since the alloy containing Mn easily corrodes in general, the high thermal expansion layer 2 easily corrodes than the low thermal expansion layer 3 composed of the alloy containing no Mn but containing Ni for the reason described above. Therefore, corrosion of the bimetal 1 advances from the high thermal expansion layer 2. In order to suppress deterioration due to the corrosion of the bimetal 1, it is considered that a passive film may be provided on the surface of the high thermal expansion layer 2 as in JP-B-3-57438. However, since the thermal expansion coefficient of the high thermal expansion layer 2 is larger than that of the low thermal expansion layer 3, dimensions change greatly due to temperature change. Therefore, when a passive film is provided on the surface of the high thermal expansion layer 2, it is noticed that the passive film cannot follow dimensional change of the high thermal expansion layer 2, and the passive film easily cracks. Further, it is noticed that the corrosion of the high thermal expansion layer 2 rapidly proceeds from a portion where the passive film cracks.

Therefore, according to the bimetal 1 according to the present embodiment, the corrosion resistant plating layer 4 having a thickness of 10 nm to 120 nm is provided on the surface of the high thermal expansion layer 2. The corrosion resistant plating layer 4 having a small thickness and composed of metal has a higher thermal expansion coefficient and a smaller elastic coefficient than the passive film which is a hard and brittle film of metal oxide. Therefore, the corrosion resistant plating layer 4 easily follows a dimensional change of the high thermal expansion layer 2, and is difficult to crack even if the temperature change repeatedly acts on the bimetal 1. Therefore, the bimetal 1 according to the present embodiment on which the corrosion resistant plating layer 4 having a thickness of 10 nm to 120 nm is provided on the surface of the high thermal expansion layer 2 is difficult to corrode and has long life by preventing from the corrosion.

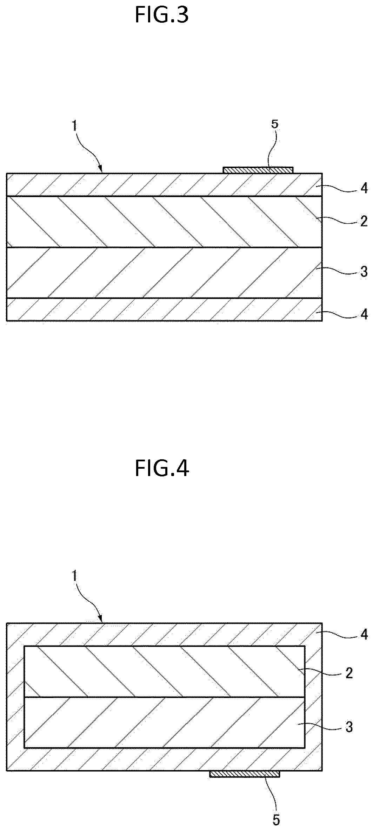

Although Fig. 1 describes a configuration in which the corrosion resistant plating layer 4 is provided only on the surface of the high thermal expansion layer 2, the present invention is not limited to this example. As shown in Fig. 2, the corrosion resistant plating layer 4 may be provided so as to cover the surface of the high thermal expansion layer 2 and a side surface of the bimetal 1. Alternatively, as shown in Fig. 3, the corrosion resistant plating layer 4 may be provided on the surface of the high thermal expansion layer 2 and on the surface of the low thermal expansion layer 3, respectively. Further, as shown in Fig. 4, the corrosion resistant plating layer 4 may be provided so as to cover an entire surface of the bimetal 1.

Although the bimetal 1 where the high thermal expansion layer 2 is directly joined to the low thermal expansion layer 3 is shown in examples shown in Fig. 1 to Fig. 4, the present invention may be applied to the trimetal where the high thermal expansion layer 2 is joined to the low thermal expansion layer 3 via the intermediate layer. Even when the present invention is applied to the trimetal, the corrosion resistant plating layer 4 having a thickness of 10 nm to 120 nm is provided on at least the surface of the high thermal expansion layer 2. Examples of the material of the raw material plate constituting the intermediate layer can include Cu (pure Cu) or a Cu alloy (a heat resistant Cu alloy or the like), Ni (pure Ni) or a Ni alloy, a Ni-Cu based alloy, and a Zr-Cu based alloy.

In many cases, the bimetal 1 is distributed to the market with an identification mark 5 provided thereon. The identification mark 5 is used to identify a surface on a side of the high thermal expansion layer 2 or the low thermal expansion layer 3 when the bimetal 1 is handled. In Fig. 1 to Fig. 4, the identification mark is represented by a reference numeral 5.

As shown in Fig. 1 and Fig. 3, the identification mark 5 can be provided on the surface of the corrosion resistant plating layer 4 on the side of the high thermal expansion layer 2. Alternatively, as shown in Fig. 2, the identification mark 5 can be provided on the surface of the low thermal expansion layer 3 exposed to the outside. Alternatively, as shown in Fig. 4, the identification mark 5 can be provided on the surface of the corrosion resistant plating layer 4 on the side of the low thermal expansion layer 3.

The identification mark 5 can be formed by a method such as acid etching, ink printing (ink jet printer or the like), laser irradiation (laser marking), or engraving. It is preferable that the identification mark 5 is formed by ink printing that does not substantially wound the surface of the bimetal 1 or acid etching that relatively shallowly wounds the surface of the bimetal 1. It should be noted that when the identification mark 5 is formed by laser irradiation or engraving, the thermal expansion layer 2 or the low thermal expansion layer 3, which is a base of the corrosion resistant plating layer 4 forming the identification mark 5, may be wounded and mechanical properties may be changed, and the curvature coefficient of the bimetal 1 may change.

Although not illustrated, it is also possible to provide the identification mark 5 on the surface of the high thermal expansion layer 2 or the low thermal expansion layer 3 covered with the corrosion resistant plating layer 4. In this case, when the thickness of the corrosion resistant plating layer 4 increases, the identification mark 5 may be unclear or difficult to transmit and difficult to read. Therefore, the identification mark 5 is preferably provided on the surface of the corrosion resistant plating layer 4 or on the surface of the low thermal expansion layer 3 exposed to the outside.

<Manufacture method>

A method of manufacturing the bimetal 1 will be described below.

The clad material where the high thermal expansion layer 2 is joined to the low thermal expansion layer 3 is produced. The clad material can be produced by a general clad rolling technique. First, two types of raw material plates including the high thermal expansion layer 2 constituting raw material plate and the low thermal expansion layer 3 constituting raw material plate, each having a predetermined thickness and adjusted to elongation and hardness suitable for clad rolling, are prepared by softening annealing, temper rolling, or the like. Next, the two types of raw material plates are clad rolled and annealed appropriately to produce the clad material having a predetermined thickness. During the clad rolling, diffusion annealing (heat treatment) is performed for increasing bonding strength by diffusion action of elements when the clad material has an appropriate thickness. Further, even after the diffusion annealing is performed, it is possible to reduce the thickness by further rolling as necessary. By performing such clad rolling, the two types of raw material plates that are the high thermal expansion layer 2 and the low thermal expansion layer 3 are joined and thinned to produce the clad material having a predetermined thickness.

Next, a degreasing treatment that degreases the surface of the clad material having a total thickness of, for example, 50 µm to 1 mm that is obtained in this manner is performed. In the degreasing treatment, the clad material is immersed in a degreasing solution having a temperature of about 10°C to 80°C for about 20 seconds. The degreasing solution may be showered on the clad material. Such a degreasing treatment may be a continuous treatment of degreasing a hoop clad material as it is, or the clad material may be diced and then degreased by a barrel treatment.

Next, a surface washing treatment is performed, in which the degreasing solution used in the degreasing treatment is removed from the surface of the clad material. In the washing treatment, water having a temperature of about 10°C to 80°C may be showered on the clad material for about 10 seconds. The clad material may be immersed in the water having a temperature of about 10°C to 80°C for about 10 seconds. Such a washing treatment may be a continuous treatment of washing the hoop clad material as it is, or the clad material may be diced and then washed by a barrel treatment.

Further, a corrosion resistant plating treatment is performed, in which the corrosion resistant plating layer 4 is provided on at least the surface of the high thermal expansion layer 2 of the clad material. The corrosion resistant plating layer 4 having a thickness of 10 nm to 120 nm is formed on at least the surface of the high thermal expansion layer 2 by the corrosion resistant plating treatment.

The corrosion resistant plating treatment may be an electrolytic plating treatment considered to be preferable as described above. The electrolytic plating treatment may be performed for about 2 seconds using the Ni electroplating solution having a pH of about 4.5 to 6.0 and a temperature of 20°C to 35°C. When the corrosion resistant plating layer 4 is formed by using such an electrolytic plating treatment, a continuous treatment of plating the hoop clad material as it is may be used, or the clad material may be diced and then plated by a barrel treatment. As to the corrosion resistant plating treatment, a Ni electroplating treatment is preferable in view of reducing treatment time and treatment cost, but an electroless plating treatment is preferable when dimensional accuracy of the thickness of the plating film be improved.

At this time, in the bimetal 1 shown in Fig. 1, side surfaces of the clad material and the surface of the low thermal expansion layer 3 are masked, and the corrosion resistant plating layer 4 is formed only on the surface of the high thermal expansion layer 2. In the bimetal 1 shown in Fig. 2, the side surfaces of the clad material are not masked, the surface of the low thermal expansion layer 3 is masked, and the corrosion resistant plating layer 4 is formed on the side surfaces of the clad material and the surface of the high thermal expansion layer 2. In the bimetal 1 shown in Fig. 3, side surfaces of the clad material are masked, and the corrosion resistant plating layer 4 is formed on the surface of the high thermal expansion layer 2 and on the surface of the low thermal expansion layer 3. In the bimetal 1 shown in Fig. 4, the clad material is not masked, and the corrosion resistant plating layer 4 is formed on an entire surface including the surface of the high thermal expansion layer 2 and the surface of the low thermal expansion layer 3.

Next, a plating solution removing treatment is performed, in which a plating solution is removed from at least the surface of the high thermal expansion layer 2. In the plating solution removing treatment, water having a temperature of about 10°C to 80°C may be showered on the clad material for about 10 seconds. The clad material may be immersed in the water having the temperature of about 10°C to 80°C for about 10 seconds. In such a plating solution removing treatment, the hoop clad material may be continuously treated as it is, or a barrel treatment may be performed after the clad material is diced.

Next, a drying treatment of drying the clad material is performed. The drying treatment is performed for about 10 seconds in a warm air bath (may be put in a heat retention furnace) by a hot wind having a temperature of about 100°C to 150°C. In such a drying treatment, the hoop clad material may be continuously treated as it is and dried, or the clad material may be diced and then dried by a barrel treatment.

It is preferable to provide the identification mark 5 after the corrosion resistant plating layer 4 is formed. The identification mark 5 may be formed on the surface of the high thermal expansion layer 2 or on the surface of the low thermal expansion layer 3.

The identification mark 5 can be provided by a method such as acid etching or ink printing (using ink jet printer). It is preferable to provide the identification mark 5 by acid etching on the surface of the high thermal expansion layer 2. This is because the high thermal expansion layer 2 composed of an alloy containing Mn easily corrodes by acid etching, and the identification mark 5 that is clearly colored by corrosion (oxidation) is obtained.

Even before or after the corrosion resistant plating treatment is performed on the clad material, and even before or after the identification mark 5 is formed, slit processing or dice processing can be performed. In the slit processing, the clad material is cut along a longitudinal direction (generally a rolling direction) to obtain a processing material having a predetermined dimension (width). The dice processing is processing in which the clad material is cut along a width direction (generally a direction orthogonal to the rolling direction) to obtain a processing material having a predetermined dimension (length).

### <Examples>

A bimetal having a length of 100 m, a width of 70 mm, a total thickness of 0.175 mm was produced. The bimetal includes a high thermal expansion layer having an average thermal expansion coefficient of about 27.7 × 10⁻⁶/°C from 30°C to 100°C which contains a Cu-Mn-Ni based metal (Cu-72 Mn-10 Ni), and a low thermal expansion layer having an average thermal expansion coefficient of about 1.3 × 10⁻⁶/°C from 30°C to 100°C which contains an Fe-Ni based metal (Fe-36 Ni). A thickness of the high thermal expansion layer was 0.093 mm, and a thickness of the low thermal expansion layer was 0.082 mm.

The bimetal was produced by the following process.

As a production process of the clad material constituting the bimetal, a raw material plate containing the metal of Cu-72 Mn-10 Ni and a raw material plate containing the metal of Fe-36 Ni were prepared, and clad rolling was performed by laminating the two types of raw material plates in a thickness direction to finally produce a clad material having a total thickness of 0.175 mm (the thickness of the high thermal expansion layer was 0.093 mm, and the thickness of the low thermal expansion layer was 0.082 mm). In the clad rolling, diffusion annealing was performed while repeating rolling and softening annealing as necessary to strengthen bonding, and the total thickness of the clad material was adjusted by finish rolling.

As the degreasing treatment, a degreasing solution having a temperature of 28°C and containing 1.0 mass% of potassium hydroxide was sprayed onto an entire surface of the clad material by spraying.

As the washing treatment, pure water having a temperature of 28°C was sprayed onto the entire surface of the clad material by spraying.

As the corrosion resistant plating treatment, the electrolytic plating treatment is considered to be preferable as described above. The Ni electroplating was performed using a plating solution at a temperature of 28°C containing 250 g/L of nickel sulfate, 40 g/L of nickel chloride, and 40 g/L of boric acid and adjusted to pH 4.7. By the Ni electroplating, a corrosion resistant plating layer (Ni plating layer) composed of Ni was formed on a surface of the high thermal expansion layer.

As the plating solution removing treatment, pure water having a temperature of 28°C was sprayed onto the entire surface of the clad material including the corrosion resistant plating layer by spraying.

As the drying treatment, hot wind having a temperature of 100°C to 120°C was blown onto the entire surface of the clad material including the corrosion resistant plating layer.

An identification mark was provided on a surface of the corrosion resistant plating layer on a side of the high thermal expansion layer by acid etching.

By such a process, various bimetals including different thicknesses of the corrosion resistant plating layers were produced. As a reference example, a bimetal without the corrosion resistant plating layer (a thickness of the corrosion resistant plating layer is 0 nm) was also produced.

### <Evaluation>

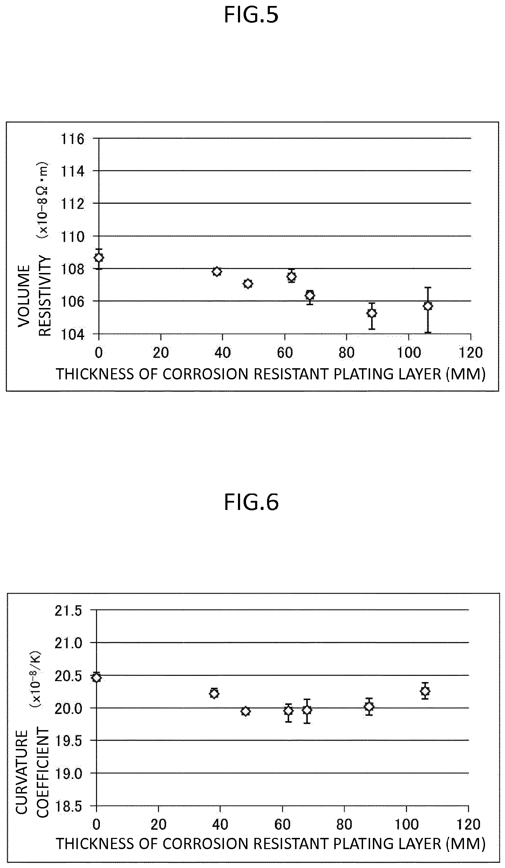

Next, a relationship between the thickness and the volume resistivity of the corrosion resistant plating layer of the various bimetals produced as described above was evaluated. Fig. 5 is a graph showing a relationship between a thickness and volume resistivity of a corrosion resistant plating layer. In Fig. 5, a horizontal axis indicates the thickness of the corrosion resistant plating layer, and a vertical axis indicates the volume resistivity. In Fig. 5, the bimetal without the corrosion resistant plating layer (reference example) is displayed as a thickness of 0 nm.

The thickness of the corrosion resistant plating layer was measured using a Glow discharge optical emission spectrometry (GD-OES) method. In this measurement, a device of a model name GD-Profiler 2 (Trade Mark) manufactured by Horiba, Ltd. was used.

### (Measurement conditions)

Method: Pulse sputtering
Measurement diameter: ϕ 7 mm
Output: 35 W
Frequency: 100 Hz
Ar gas pressure: 600 Pa

In the above measurement, sputtering was started from the surface of the corrosion resistant plating layer (substantially pure Ni) on the side of the high thermal expansion layer (Cu-72 Mn-10 Ni) having a lower content ratio of Ni, and sputtering elapsed time when the Ni content ratio changes greatly was determined. The sputtering elapsed time was converted into a sputtering length (depth from the surface) to obtain the thickness of the corrosion resistant plating layer.

According to the measurement method, thickness of the corrosion resistant plating layer of each bimetal was measured separately at three arbitrary positions. An average of the thicknesses at the three positions was calculated as the thickness of the corrosion resistant plating layer of each bimetal. The thickness of the corrosion resistant plating layer of each bimetal was 0 nm (reference example), 38 nm, 48 nm, 62 nm, 68 nm, 88 nm, and 106 nm respectively.

The volume resistivity of the bimetal was measured by a four terminal method in accordance with JIS C2525. Three test pieces each having a length of 120 mm and a width of 10 mm were cut out from each of the produced bimetals (total thickness: 0.175 mm) and used for measurement. A measurement temperature was 23°C.

As shown in Fig. 5, the thickness of the corrosion resistant plating layer is in a range of 10 nm to 120 nm, and variation in the volume resistivity of the three test pieces cut from each of the bimetals falls within ± 5%. Therefore, it was confirmed that the volume resistivity of the bimetal including the corrosion resistant plating layer having a thickness of 10 nm to 120 nm was slightly different from the volume resistivity of the bimetal without the corrosion resistant plating layer. A result that the variation of the volume resistivity is within ± 5% indicates that the bimetal including the corrosion resistant plating layer having a thickness of 10 nm to 120 nm is suitable for practical use in accordance with JIS Z8703 (see Table 2, tolerance of volume resistivity). As shown in Fig. 5, it was confirmed that the volume resistivity of the test piece tended to decrease while the thickness of the corrosion resistant plating layer varied along with increase. Therefore, when the thickness of the corrosion resistant plating layer of the bimetal exceeds 120 nm and further increases, it is appropriate that the volume resistivity of the bimetal decreases toward the volume resistivity of the corrosion resistant plating layer (Ni plating layer).

Next, a relationship between the thickness and the curvature coefficient of the corrosion resistant plating layer of the bimetal produced as described above was evaluated. Fig. 6 is a graph showing a relationship between the thickness and a curvature coefficient of the corrosion resistant plating layer. In Fig. 6, a horizontal axis indicates the thickness of the corrosion resistant plating layer, and a vertical axis indicates the curvature coefficient. In Fig. 6, the bimetal without the corrosion resistant plating layer (reference example) is displayed as a thickness of 0 nm.

The thickness of the corrosion resistant plating layer was measured using the GD-OES method as described above. The curvature coefficient of the bimetal was measured by a measurement method in accordance with JIS C2530. Three test pieces each having a length of 50 mm and a width of 2 mm were cut out from each of the produced bimetals (total thickness: 0.175 mm) and used for measurement. A measurement temperature was 23°C.

As shown in Fig. 6, the thickness of the corrosion resistant plating layer is in a range of 10 nm to 120 nm, and variation in the curvature coefficient of the three test pieces cut from each of the bimetals falls within ± 5%. Therefore, it was confirmed that the curvature coefficient of the bimetal including the corrosion resistant plating layer having a thickness of 10 nm to 120 nm was slightly different from the curvature coefficient of the bimetal without the corrosion resistant plating layer. A result that the variation of the curvature coefficient is within ± 5% indicates that the bimetal including the corrosion resistant plating layer having a thickness of 10 nm to 120 nm is suitable for practical use in accordance with JIS Z8703 (see Table 2, tolerance of curvature coefficient). As shown in Fig. 6, it was confirmed that the curvature coefficient of the test piece tended not to increase or decrease while the thickness of the corrosion resistant plating layer varied along with increase. Therefore, even when the thickness of the corrosion resistant plating layer of the bimetal exceeds 120 nm and further increases to, for example, about 150 nm, it is understood that a substantial change amount of the curvature coefficient of the bimetal is small.

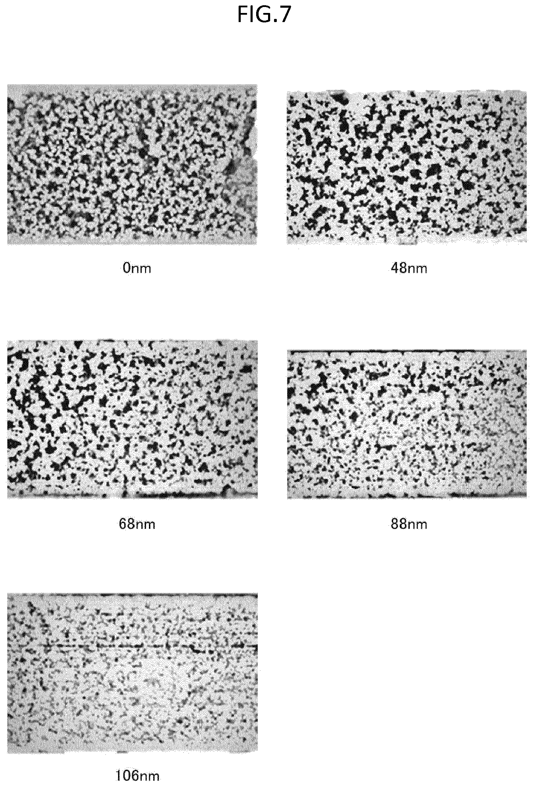

Next, a relationship between the thickness and corrosion resistance of the corrosion resistant plating layer of the bimetal was evaluated, in which the thickness of the corrosion resistant plating layer is 0 nm (reference example), 48 nm, 68 nm, 88 nm, and 106 nm. Fig. 7 is a photograph showing a surface of a high thermal expansion layer after performing a corrosion test on each of the bimetals. In Fig. 7, the bimetal without the corrosion resistant plating layer (reference example) is displayed as a thickness of 0 nm.

A corrosion test was performed using a saline water spray testing machine manufactured by Suga Test Instruments. Test pieces each having a length of 100 mm and a width of 10 mm were cut out from each of the produced bimetals each having a total thickness of 0.175 mm. The test pieces were used for measurement. A 5% of sodium chloride aqueous solution was sprayed to the bimetal for 60 minutes at a temperature in a spray chamber of 35°C ± 2°C. The surface on the side of the high thermal expansion layer of each bimetal after the test was imaged by a microscope. The micrographs were evaluated by eyes of an expert and divided into three stages of grades 1 to 3 according to a degree of corrosion. Grade 1 shows that corrosion is severe and the bimetal cannot withstand practical use. Grade 2 shows that corrosion is recognized but the corrosion does not affect bimetallic properties. Grade 3 shows that there is little corrosion and the bimetal can withstand practical use sufficiently.

As shown in Fig. 7, a bimetal in which the thickness of the corrosion resistant plating layer is 0 nm (reference example) was evaluated as grade 1. A bimetal in which the thickness of the corrosion resistant plating layer is 48 nm and a bimetal in which the thickness of the corrosion resistant plating layer is 68 nm were evaluated as grade 2. A bimetal in which the thickness of the corrosion resistant plating layer is 88 nm and a bimetal in which the thickness of the corrosion resistant plating layer is 106 nm were evaluated as grade 3. From this result, it was confirmed that the corrosion resistance was imparted to the bimetal by providing the corrosion resistant plating layer. It was also confirmed that the corrosion resistance of the bimetal improved as the thickness of the corrosion resistant plating layer increased.

## Claims

1. A dissimilar metal joined material comprising:
a clad material comprising:
a high thermal expansion layer composed of an alloy containing Mn selected from a Fe-Ni-Mn based alloy containing 15% to 30% of Ni, 2% to 10% of Mn and the balance of Fe and unavoidable impurities, and a Cu-Mn-Ni based alloy containing 60% to 80% of Mn, 5% to 20% of Ni and the balance of Cu and unavoidable impurities, and
a low thermal expansion layer composed of an alloy containing Ni selected from a Fe-Ni based alloy containing 30% to 60% of Ni and the balance of Fe and unavoidable impurities, Fe-29 Ni-17 Co, Fe-36 Ni-12 Cr, Fe-36 Ni-9 Cr, Fe-42 Ni-5.5 Cr-1 Ti, and Fe-43 Ni-5 Cr-3 Ti-1 Co, the low thermal expansion layer being joined directly to the high thermal expansion layer or joined via an intermediate layer; and
a corrosion resistant plating layer provided on at least a surface of the high thermal expansion layer, wherein the corrosion resistant plating layer is a Ni plating layer, and **characterized by** that the corrosion resistant plating layer has a thickness of 10 nm to 120 nm.

2. The dissimilar metal joined material according to claim 1, further comprising an identification mark provided on a surface thereof.

3. A method of manufacturing a dissimilar metal joined material, the method comprising the successive steps of:
degreasing surfaces of a clad material comprising: a high thermal expansion layer composed of an alloy containing Mn selected from a Fe-Ni-Mn based alloy containing 15% to 30% of Ni, 2% to 10% of Mn and the balance of Fe and unavoidable impurities, and a Cu-Mn-Ni based alloy containing 60% to 80% of Mn, 5% to 20% of Ni and the balance of Cu and unavoidable impurities, and a low thermal expansion layer composed of an alloy containing Ni, selected from a Fe-Ni based alloy containing 30% to 60% of Ni and the balance of Fe and unavoidable impurities, Fe-29 Ni-17 Co, Fe-36 Ni-12 Cr, Fe-36 Ni-9 Cr, Fe-42 Ni-5.5 Cr-1 Ti, and Fe-43 Ni-5 Cr-3 Ti-1 Co, the low thermal expansion layer being joined directly to the high thermal expansion layer or joined via an intermediate layer;
washing at least the surface of the high thermal expansion layer;
plating at least the surface of the high thermal expansion layer with a Ni plating solution, **characterized by** that the plating solution has a pH of 4.5 to 6.0, to form a corrosion resistant plating layer having a thickness of 10 nm to 120 nm;
removing the plating solution from the surface of the high thermal expansion layer; and
drying the dissimilar metal joined material.

## Patentansprüche

1. Verbundmaterial aus unterschiedlichen Metallen, umfassend:
ein plattiertes Material, umfassend:
eine Schicht mit hoher Wärmeausdehnung aus einer Mn enthaltenden Legierung, ausgewählt unter einer Fe-Ni-Mn basierten Legierung mit 15% bis 30% Ni, 2% bis 10% Mn und als Differenz Fe und unvermeidbare Verunreinigungen, und einer Cu-Mn-Ni basierten Legierung mit 60% bis 80% Mn, 5% bis 20% Ni und als Differenz Cu und unvermeidbare Verunreinigungen, und
eine Schicht mit niedriger Wärmeausdehnung aus einer Ni enthaltenden Legierung, ausgewählt unter einer Fe-Ni basierten Legierung mit 30% bis 60% Ni und als Differenz Fe und unvermeidbare Verunreinigungen, Fe-29 Ni-17 Co, Fe-36 Ni-12 Cr, Fe-36 Ni-9 Cr, Fe-42 Ni-5.5 Cr-1 Ti, und Fe-43 Ni-5 Cr-3 Ti-1 Co, wobei die Schicht mit niedriger Wärmeausdehnung direkt mit der Schicht mit hoher Wärmeausdehnung oder über eine Zwischenschicht verbunden ist; und
eine auf zumindest einer Oberfläche der Schicht mit hoher Wärmeausdehnung vorgesehene korrosionsbeständige Plattierungsschicht, wobei die korrosionsbeständige Plattierungsschicht eine Ni-Plattierungsschicht ist, und **dadurch gekennzeichnet ist, dass** die korrosionsbeständige Plattierungsschicht eine Dicke von 10 nm bis 120 nm aufweist.

2. Verbundmaterial aus unterschiedlichen Metallen nach Anspruch 1, ferner umfassend eine auf einer Oberfläche davon vorgesehene Identifikationsmarkierung.

3. Verfahren zur Herstellung eines Verbundmaterials aus unterschiedlichen Metallen, umfassend die aufeinanderfolgenden Schritte:
Entfetten von Oberflächen eines plattierten Materials, welches umfasst: eine Schicht mit hoher Wärmeausdehnung aus einer Mn enthaltenden Legierung, ausgewählt unter einer Fe-Ni-Mn basierten Legierung mit 15% bis 30% Ni, 2% bis 10% Mn und als Differenz Fe und unvermeidbare Verunreinigungen, und einer Cu-Mn-Ni basierten Legierung mit 60% bis 80% Mn, 5% bis 20% Ni und als Differenz Cu und unvermeidbare Verunreinigungen, und eine Schicht mit niedriger Wärmeausdehnung aus einer Ni enthaltenden Legierung, ausgewählt unter einer Fe-Ni basierten Legierung mit 30% bis 60% Ni und als Differenz Fe und unvermeidbare Verunreinigungen, Fe-29 Ni-17 Co, Fe-36 Ni-12 Cr, Fe-36 Ni-9 Cr, Fe-42 Ni-5.5 Cr-1 Ti, und Fe-43 Ni-5 Cr-3 Ti-1 Co, wobei die Schicht mit niedriger Wärmeausdehnung direkt mit der Schicht mit hoher Wärmeausdehnung oder über eine Zwischenschicht verbunden ist;
Waschen zumindest der Oberfläche der Schicht mit hoher Wärmeausdehnung;
Plattieren zumindest der Oberfläche der Schicht mit hoher Wärmeausdehnung mit einer Ni-Galvanisierungslösung, **dadurch gekennzeichnet, dass**
die Galvanisierungslösung einen pH von 4.5 bis 6.0 aufweist, um eine korrosionsbeständige Plattierungsschicht mit einer Dicke von 10 nm bis 120 nm zu bilden;
Entfernen der Galvanisierungslösung von der Oberfläche der Schicht mit hoher Wärmeausdehnung; und
Trocknen des Verbundmaterials aus unterschiedlichen Metallen.

## Revendications

1. Matériau assemblé métallique dissemblable comprenant :
un matériau plaqué comprenant :
une couche à forte dilatation thermique composée d'un alliage contenant du Mn choisi parmi un alliage à base de Fe-Ni-Mn contenant 15% à 30% de Ni, 2% à 10% de Mn et le reste étant du Fe et des impuretés incontournables, et un alliage à base de Cu-Mn-Ni contenant 60% à 80% de Mn, 5% à 20% de Ni et le reste étant du Cu et des impuretés inévitables, et
une couche à faible dilatation thermique composé d'un alliage contenant du Ni choisi parmi un alliage à base de Fe-Ni contenant 30% à 60% de Ni et le reste étant du Fe et des impuretés inévitables, Fe-29 Ni-17 Co, Fe-36 Ni-12 Cr, Fe-36 Ni-9 Cr, Fe-42 Ni-5,5 Cr-1 Ti et Fe-43 Ni-5 Cr-3 Ti-1 Co, la couche à faible dilatation thermique étant assemblée directement à la couche à forte dilatation thermique ou étant assemblée via une couche intermédiaire ; et
une couche de placage résistante à la corrosion disposée sur au moins une surface de la couche à forte dilatation thermique, dans lequel la couche de placage résistante à la corrosion est une couche de placage Ni, et **caractérisé en ce que** la couche de placage résistante à la corrosion a une épaisseur de 10 nm à 120 nm.

2. Matériau assemblé métallique dissemblable selon la revendication 1, comprenant en outre une marque d'identification prévue sur une surface de celui-ci.

3. Procédé de fabrication d'un matériau assemblé métallique dissemblable, le procédé comprenant les étapes successives de :
dégraissage de surfaces d'un matériau gainé comprenant : une couche à forte dilatation thermique composée d'un alliage contenant du Mn choisi parmi un alliage à base de Fe-Ni-Mn contenant 15% à 30% de Ni, 2% à 10% de Mn et le reste étant du Fe et des impuretés inévitables, et un alliage à base de Cu-Mn-Ni contenant 60% à 80% de Mn, 5% à 20% de Ni et le reste étant du Cu et des impuretés inévitables, et une couche à faible dilatation thermique composée d'un alliage contenant du Ni, choisi parmi un alliage à base de Fe-Ni contenant 30% à 60% de Ni et le reste étant du Fe et des impuretés inévitables, Fe-29 Ni-17 Co, Fe-36 Ni-12 Cr, Fe-36 Ni-9 Cr, Fe-42 Ni-5,5 Cr-1 Ti et Fe-43 Ni-5 Cr-3 Ti-1 Co, la couche à faible dilatation thermique étant assemblée directement à la couche à forte dilatation thermique ou étant assemblé via une couche intermédiaire ;
lavage d'au moins la surface de la couche à forte dilatation thermique ;
plaquage d'au moins la surface de la couche à forte dilatation thermique avec une solution de placage de Ni, **caractérisé en ce que** la solution de placage a un pH de 4,5 à 6,0, pour former une couche de placage résistante à la corrosion ayant une épaisseur de 10 nm à 120 nm ;
retrait de la solution de placage depuis la surface de la couche à forte dilatation thermique ; et
séchage du matériau assemblé métallique dissemblable.
